(19) Europäisches Patentamt
European Patent Office
Office européen des brevets

(11) Publication number: **0 033 806**
**A2**

(12) # EUROPEAN PATENT APPLICATION

(21) Application number: **80304679.6**

(22) Date of filing: **22.12.80**

(51) Int. Cl.³: **C 08 L 33/20**, C 08 L 51/04, C 08 L 55/02, C 08 L 91/00

(30) Priority: **26.12.79 US 106972**

(43) Date of publication of application: **19.08.81**
**Bulletin 81/33**

(84) Designated Contracting States: **BE CH DE FR GB IT LI LU NL SE**

(71) Applicant: **THE STANDARD OIL COMPANY, Midland Building, Cleveland, Ohio 44115 (US)**

(72) Inventor: **Feldman, Daniel Wolf, 23213 Fairmount Boulevard, Beachwood Ohio 44122 (US)**

(74) Representative: **Smith, Sydney et al, Elkington and Fife High Holborn House 52/54 High Holborn, London WC1V 6SH (GB)**

(54) **High nitrile copolymer resins having improved impact resistance.**

(57) The inclusion of small amounts of epoxidised vegetable oils into high nitrile copolymers produces compositions of higher impact resistance. Representative oils are epoxidised soybean oil, linseed oil or butyl linseed oil. They are incorporated in an amount of from 0.1 to 20 parts by weight per 100 parts by weight of high nitrile polymer. A preferred polymer is a nitrile rubber-modified copolymer of 75% by weight of acrylonitrile and 25% by weight of methyl acrylate.

EP 0 033 806 A2

Title

HIGH NITRILE COPOLYMER RESINS HAVING IMPROVED IMPACT RESISTANCE

This invention relates to the improvement of the impact resistance of thermoplastic copolymers of olefinic nitriles and more particularly pertains to impact-resistant thermoplastic high nitrile copolymer compositions having improved impact resistance.

It has been found that the impact resistance of high nitrile copolymers may be improved by the incorporation therein of small amounts of certain epoxidized vegetable oils.

According to the invention, certain epoxidized vegetable oils are dispersed in a weight ratio within 0.1 to 20 parts by weight, and preferably from I to 10 parts by weight, based on 100 parts by weight of high nitrile copolymer to form thermoplastic compositions having improved impact resistance. The resulting novel mixtures also have excellent physical properties.

Although epoxidized vegetable oils have been used as plasticizers in other resins, it is indeed unobvious and unexpected that these materials function as impact improvers in the present invention.

The copolymers of olefinic nitriles useful in this invention are those prepared by polymerizing a major proportion of a monounsaturated nitrile, such as acrylonitrile, and a minor proportion of

another monovinyl monomer component copolymerizable with said nitrile in an aqueous medium in the presence of a rubbery polymer of a conjugated diene monomer and optionally at least one comonomer.

The conjugated diene monomers useful in the present invention include butadiene, isoprene, chloroprene, bromoprene, cyanoprene, 2,3-dimethylbutadiene, 2-ethyl butadiene and 2,3-diethylbutadiene. It is preferred to use butadiene and isoprene because of their ready availability and their excellent copolymerization properties.

The olefinically unsaturated nitriles useful in the present invention are the alpha-beta-olefinically unsaturated mononitriles having the structure $CH_2=\underset{R}{\underset{|}{C}}-CN$ wherein R is hydrogen, a lower alkyl group having from 1 to 4 carbon atoms, or a halogen. Such compounds include acrylonitrile, alpha-chloroacrylonitrile, alpha-fluoroacrylonitrile, methacrylonitrile and ethacrylonitrile. Acrylonitrile and methacrylonitrile and mixtures thereof are preferred.

The other monovinyl monomer components copolymerizable with the olefinically unsaturated nitriles which are useful in this invention include one or more of the vinyl aromatic monomers, esters of olefinically unsaturated carboxylic acids, vinyl esters, vinyl ethers, alpha-olefins and indene.

The vinyl aromatic monomers include styrene, alpha-methyl styrene, the vinyl toluenes and the vinyl xylenes. Styrene is preferred.

The esters of olefinically unsaturated carboxylic acids include those having the structure

$CH_2{=}C(R_1){-}COOR_2$ wherein $R_1$ is hydrogen, an alkyl group having from 1 to 4 carbon atoms, or a halogen, and $R_2$ is an alkyl group having from 1 to 6 carbon atoms. Compounds of this type include methyl acrylate, ethyl acrylate, the propyl acrylates, the butyl acrylates, the amyl acrylates, and the hexyl acrylates; methyl methacrylate, ethyl methacrylate, the propyl methacrylates, the butyl methacrylates, the amyl methacrylates, and the hexyl methacrylates; and methyl alpha-chloroacrylate and ethyl alpha-chloroacrylates. Methyl acrylate, ethyl acrylate, methyl methacrylate, and ethyl methacrylate are preferred.

The alpha-olefins useful in the present invention are those having at least 4 and as many as 10 carbon atoms and which have the structure $CH_2{=}C(R')(R'')$ wherein R' and R" are alkyl groups having from 1 to 7 carbon atoms. Preferred alpha-olefins include isobutylene, 2-methyl butene-1, 2-methyl pentene-1, 2-methyl hexene-1, 2-methyl heptene-1, 2-methyl octene-1, 2-ethyl butene-1 and 2-propyl pentene-1. Isobutylene is most preferred.

The vinyl ethers useful in this invention include methyl vinyl ether, ethyl vinyl ether, the propyl vinyl ethers, the butyl vinyl ethers, methyl isopropenyl ether and ethyl isopropenyl ether. Methyl vinyl ether, ethyl vinyl ether, the propyl vinyl ethers and the butyl vinyl ethers are most preferred.

Vinyl esters useful in this invention include

vinyl acetate, vinyl propionate and the vinyl butyrates. Vinyl acetate is most preferred.

The preferred polymers which may be used in this invention are those prepared by the polymerization of 100 parts by weight of (A) from 60 to 90% by weight of at least one nitrile having the structure $CH_2=\underset{R}{\underset{|}{C}}-CN$ wherein R has the foregoing designation and (B) from 10 to 40% by weight based on the combined weight of (A) plus (B) of at least one member selected from the group consisting of (1) styrene, (2) an ester having the structure $CH_2=\underset{R_1}{\underset{|}{C}}-COOR_2$ wherein $R_1$ and $R_2$ have the foregoing designations, (3) an alpha-olefin having the structure $CH_2=\overset{R'}{\overset{|}{\underset{R''}{\underset{|}{C}}}}$ wherein R' and R" have the foregoing designations, (4) a vinyl ether selected from the group consisting of methyl vinyl ether, ethyl vinyl ether, the propyl vinyl ethers, and the butyl vinyl ethers, (5) vinyl acetate, and (6) indene, in the presence of from 1 to 40 parts by weight of (C) a rubbery polymer of a conjugated diene monomer selected from the group consisting of butadiene and isoprene, and optionally at least one comonomer selected from the group consisting of styrene, a nitrile monomer having the structure $CH_2=\underset{R}{\underset{|}{C}}-CN$ wherein R has the foregoing designation, and an ester having the structure $CH_2=\underset{R_1}{\underset{|}{C}}-COOR_2$ wherein $R_1$ and $R_2$ have the foregoing designations, said rubbery polymer containing from 50 to 100% by weight of polymerized conjugated

diene and from 0 to 50% by weight of comonomer.

The epoxidized vegetable oils which can be used in the present invention include epoxidized soybean oil, epoxidized linseed oil, epoxidized butyl linseed oil, and other oils. A particularly preferred oil is epoxidized butyl linseed oil.

The epoxidized vegetable oils can be dispersed in the nitrile copolymer resins in any one of a number of ways which are well known to those skilled in the art. The dispersions can be made in an extruder, an internal mixer such as Banbury or Brabender, and the dispersion can also be made by adding the epoxidized vegetable oil to the polymer latex, dispersion or solution. Dispersions can also be made by adding the epoxidized vegetable oil to the powdered resin in a high speed mixer.

The compositions produced according to the present invention are useful thermoplastic materilas which can be moulded into containers, pipes, rods, films, sheets, fibres, and the like, to be used for packaging, storing, and transporting solids, liquids and gases of various types.

The following Examples illustrate the invention. In these examples the amounts of ingredients are expressed in parts by weight unless otherwise indicated.

Example 1

(a) A nitrile rubber-modified copolymer of 75% by weight of acrylonitrile and 25% by weight of methyl acrylate was prepared according to the procedure of Example VIII of U.S. Patent No. 3,426,102 which is set out at the end of this Example, as a matter of convenience as it refers back to other Examples in that specification.

(b) Some of the polymer described in Example 1 was milled on a rubber mill and varying amounts of epoxidized butyl linseed oil were incorporated into the polymer on the mill. Each sample was compression moulded into a test bar and notched Izod impact strength was determined. The results are shown in Table 1.

Table 1

| | | | | |
|---|---|---|---|---|
| epxodized butyl linseed oil | 0 | 0.3% | 0.6% | 1.2% |
| notched Izod impact strength (foot pounds per inch of notch) | 3.54 | 4.21 | 5.89 | 6.96 |

Procedure of Example VIII of U.S. Patent 3426102

A. A rubber latex was prepared by polymerizing with continuous agitation at 45°C. in the substantial absence of oxygen a mixture of the following ingredients:

| | Parts |
|---|---|
| Acrylonitrile | 14 |
| Butadiene-1,3 | 86 |
| GAFAC RE-610[1] (emulsifier) | 2.4 |
| Azo-bis-isobutyronitrile | 0.3 |
| t-Dodecyl mercaptan | 0.5 |
| Water | 200 |

[1] which is a mixture of $R\text{-}O(CH_2CH_2O\text{-})_nPO_3M_2$ and $[R\text{-}O(CH_2CH_2O\text{-})_n]_2PO_2M$ wherein n is a number from 1 to 40, R is an alkyl or alkaryl group and preferably a nonyl phenyl group and M is hydrogen, ammonia or an alkali metal, which composition is sold by the General Aniline and Film Corp.

Before the reaction was started the pH of the mixture was adjusted to about 8 with KOH. The polymerization was carried out for 22½ hours

to a conversion of 92% and a total solids of 33.1%.

B. A high impact resin was prepared by polymerization of a mixture of the following ingredients:

| | Parts |
|---|---|
| Acrylonitrile | 75 |
| Methyl acrylate | 25.0 |
| Latex A (above) | 31.9 |
| Potassium persulfate | 0.06 |
| GAFAC RE-610 (emulsifier) | 3.0 |
| n-Dodecyl mercaptan | 1.0 |
| Ethylene diamine tetracetic Acid (versene acid) | 0.05 |
| Water | 200 |

The pH was adjusted to about 7 with KOH. The polymerization was carried out on the substantial absence of oxygen at 60°C. for twenty hours so as to produce a conversion of 97% of a latex having 33% solids. The polymer was isolated from this latex by coagulation with dilute aqueous aluminium sulfate. The polymer was washed with water, dried and compression molded into a bar at 150°C.

The final polymeric product, containing 12 parts of the rubber per 112 parts of polymer, was found to have excellent physical properties including a notched Izod impact strength of 2.64 foot pounds per inch of notch.

Example 2

The procedure of Example 1 (b) was repeated except that the epoxidized butyl linseed oil was added to the resin crumb prior to the densification of the mixture in a screw-type extruder. Twenty-ounce bottles were blown from the

resin. They were filled with water and drop height was determined. The results obtained are shown in Table 2.

Table 2

| | | |
|---|---|---|
| epoxidized butyl linseed oil | 0 | 0.5% |
| room-temperature drop height | 5.5 feet (1.67m) | 14.9 feet (4.5m) |
| 0°F drop height | 3.2 feet (0.972m) | Not tested. |

Table 2 contd...

| | | |
|---|---|---|
| epoxidized butyl linseed oil | 1.0% | 1.5% |
| room-temperature drop height | 18.0 feet (5.47m) | 18.1 feet (5.50m) |
| 0°F drop height | Not tested. | 4.7 feet (1.43m) |

Example 3

The procedure of Example 2 was repeated except that one-gallon bottles were made for the drop-height tests. The control bottles (no added epoxidized butyl linseed oil) had a roomtemperature drop height of 5.4 feet (1.64) whereas the bottles made from resin containing 1% of epoxidized butyl linseed oil had a roomtemperature drop height of 9.9 feet (3.00 mm).

CLAIMS:

1. A high nitrile copolymer composition having improved impact resistance characterised in that it contains from 0.1 to 20 parts by weight per 100 parts by weight of copolymer of an epoxidised vegetable oil.

2. A composition as claimed in claim 1 characterised in that it contains from 1 to 10 parts by weight of the epoxidised vegetable oil.

3. A composition as claimed in claim 1 or claim 2 characterised in that the epoxidised vegetable oil, is an epoxidised soybean oil, linseed oil or butyl linseed oil.

4. A composition as claimed in claim 1 comprising an intimate mixture of 100 parts by weight of

(I) a polymer prepared by the polymerization in an aqueous medium of 100 parts by weight of

(A) from 60 to 90% by weight of at least one nitrile having the structure $CH_2{=}\underset{R}{\underset{|}{C}}{-}CN$ wherein R is hydrogen, a lower alkyl group having from 1 to 4 carbon atoms, or a halogen, and

(B) from 10 to 40% by weight based on the combined weight of (A) plus (B) of at least one member selected from the group consisting of

(1) styrene,

(2) an ester having the structure $CH_2{=}C(R_1){-}COOR_2$ wherein $R_1$ is hydrogen, an alkyl group having from 1 to 4 carbon atoms, or a halogen, and $R_2$ is an alkyl group having from 1 to 6 carbon atoms,

(3) an alpha-olefin having the structure $CH_2{=}C(R')(R'')$ wherein R' and R" are alkyl groups having from 1 to 7 carbon atoms,

(4) a vinyl ether selected from the group consisting of methyl vinyl ether, ethyl vinyl ether, the propyl vinyl ethers, and the butyl vinyl ethers,

(5) vinyl acetate, and

(6) indene,

in the presence of from 1 to 40 parts by weight of

(C) a rubbery polymer of a conjugated diene monomer selected from the group consisting of butadiene and isoprene and optionally at least one comonomer selected from the group consisting of styrene, a nitrile monomer having the structure $CH_2{=}C(R){-}CN$ wherein R has the foregoing designation, and an ester having the structure $CH_2{=}C(R_1){-}COOR_2$

wherein $R_1$ and $R_2$ have the foregoing designations, said rubbery polymer containing from 50 to 100% by weight of a polymerized conjugated diene and from 0 to 50% by weight of comonomer, and from about 0.1 to 20 parts by weight of

(I1) at least one member selected from the group consisting of epoxidized soybean oil, epoxidized linseed oil, and epoxidized butyl linseed oil.

5. A composition as claimed in claim 4 characterised in that (A) is a member selected from the group consisting of acrylonitrile or methacrylonitrile.

6. A composition as claimed in claim 4 or claim 5 characterised in that (B) is methyl acrylate.

7. A composition as claimed in any of claims 4 to 6 characterised in that (C) is a butadiene-acrylonitrile copolymer.

8. A composition as claimed in any of claims 4 to 7 characterised in that (11) is present in an amount of 1 to 10 parts by weight.

9. A process for the preparation of a composition as claimed in any of claims 1 to 8 which comprises blending components 1 and 11 together.

10. An article having improved impact resistance characterised in that it is made of or includes a composition as claimed in any of claims 1 to 9.